# EUROPÄISCHE PATENTSCHRIFT

(11) **EP 2 499 103 B1**
(45) Veröffentlichungstag und Bekanntmachung des Hinweises auf die Patenterteilung: **12.10.2022**
(21) Anmeldenummer: 10790362.7
(22) Anmeldetag: 08.11.2010
(51) Int. Cl.: C04B 20/10, C04B 24/02, C04B 24/08, C04B 24/42, C04B 40/00, C04B 28/02

(54) **PULVERFÖRMIGE ZUSAMMENSETZUNG**
POWDERED COMPOSITION
COMPOSITION PULVÉRULENTE

(30) Priorität: 11.11.2009 EP 09175652
(43) Veröffentlichungstag der Anmeldung: 19.09.2012
(73) Patentinhaber: BASF Construction Additives GmbH, 83308 Trostberg (DE)
(72) Erfinder: MAIER, Markus, 83308 Trostberg (DE); PROSIEGEL, Klaus, 83308 Trostberg (DE); GOLDBRUNNER, Johann, 84518 Garching (DE); THEISSIG, Daniele, 84518 Garching (DE)
(74) Vertreter: BASF IP Association
(86) Internationale Anmeldenummer: PCT/EP2010/066994
(87) Internationale Veröffentlichungsnummer: WO 2011/057979

(56) Entgegenhaltungen:
- EP-A1- 1 767 506
- EP-A2- 1 193 287
- WO-A1-2004/103928
- WO-A1-2006/061139
- DE-A1-102004 057 996
- DE-U1-202006 016 797
- DE-U1-202006 016 797

## Beschreibung

Gegenstand der vorliegenden Erfindung ist eine pulverförmige Zusammensetzung, die frei ist von Kohlenwasserstoffen, mit auf einem Trägermaterial aufgebrachten aktiven Komponenten, sowie die Verwendung der Zusammensetzung als Entschäumer für Trockenmörtelanwendungen.

Es ist seit längerem bekannt, dass Polymer-modifizierte, bauchemische Zusammensetzungen wie Mörtel und Betone, ein deutlich verbessertes Eigenschaftsprofil gegenüber den nicht modifizierten Varianten aufweisen. Die Modifizierung erfolgt dabei durch die Zugabe von vorrangig polymeren Dispergiermitteln, welche bspw. das Fließverhalten der angemachten, aber noch nicht ausgehärteten bauchemischen Masse verbessert. Die Zugabe des Dispergiermittels erfolgt dabei in flüssiger oder aber auch in Pulverform.

Nachteilig bei den entsprechend Polymer-modifizierten Mörteln und Betonen ist jedoch die Tatsache, dass die Modifikation einen erhöhten Lufteintrag in die angemachte Masse bedingt. Dabei kann der Luftgehalt in modifizierten Varianten auf bis das 20 fache erhöht sein. Die Luftaufnahme in der bauchemischen Masse ist verbunden mit negativen Auswirkungen auf das ausgehärtete Produkt, was sich bspw. in einer nicht ausreichenden Qualität hinsichtlich der Biegezug- und Druckfestigkeit, der Haftzugfestigkeit, der Wasseraufnahme und auch der Frost-Tausalz-Stabilität äußert. So fallen die Biegezugfestigkeit, die Druckfestigkeit und auch die Haftzugsfestigkeit durch die höhere Porosität mit zunehmendem Luftgehalt merklich ab. Durch die erhöhte kapillare Saugfähigkeit wird außerdem die Wasseraufnahme erhöht und damit die Frost-Tausalz-Beständigkeit verschlechtert.

Um den Luftgehalt niedrig zu halten, werden deshalb spezielle Entschäumer der bauchemischen Mischung (z.B. einem Trockenmörtel) zugesetzt. Für abbindende Systeme und insbesondere hydraulisch abbindende bauchemische Systeme haben sich insbesondere Entschäumer auf Silikon-, Öl- oder Kohlenwasserstoffbasis und insbesondere Polyglycole, Fettsäurederivate und Trialkylphosphate bewährt. In der Regel werden den 2-Komponenten-Systemen flüssige Entschäumer zugegeben. Für 1-Komponenten-Systeme, die als Trockenmörtel vorliegen, gibt es Entschäumer in Pulverform, die der trockenen bauchemischen Mischung zugesetzt werden.

Entschäumer sind in der Regel Formulierungen mit einer ausgeprägten Grenzflächenaktivität, die insbesondere geeignet sind, eine unerwünschte Schaumbildung zu unterdrücken oder den bereits gebildeten Schaum zu zerstören. Eine wichtige Rolle bei der spezifischen Wirkungsweise der Entschäumer spielt die so genannte "Spreitung", unter der man das Maß für die Fähigkeiten von Ölen und ähnlichen Substanzen versteht, sich flächig auszubreiten. Entschäumer weisen deshalb auch eine ausgeprägte Tensidwirkung auf.

Aus dem Stand der Technik sind als Entschäumer in zementären Anwendungen entweder als einkomponentige Systeme bestehend aus Silikonen, Mineralölen, Kohlenwasserstoffen, Polyglycolen, Fettsäurederivaten oder Trialkylphosphaten oder als Kombinationen aus Polyglycolen mit Mineralölen mit Fettderivaten, Polyglycolen mit Mineralölen, Polyglycolen mit Mineralölen mit Silikonen, Mineralöle mit Silikonen mit Fettderivaten bekannt. Diese Produkte beinhalten also als weitere verpflichtende Komponente Kohlenwasserstoffe des mehrkomponentigen, chemisch heterogenen Entschäumersystems.

Bekannt sind aber auch flüssige Entschäumer aus dem Bereich wasserlöslicher Farben und Lacke (nichtzementär), bei dem ein spezieller modifizierter Alkohol mit Silikonen kombiniert wird (z.B. Dehydran 1620 von Cognis).

Vielfach verbreitet sind aber auch Fettalkohol-modifizierte Copolymere, die als polymere Entschäumer eingesetzt werden. In diesem Zusammenhang sei auf EP 1 260 536 A1 verwiesen. Geeignet sind aber auch Silikon-basierte Entschäumer bzw. Formulierungen, wie sie im US-Patent 7,566,750 und in der US-Anmeldung 2009/0137446 beschrieben sind.

Zusammenfassend ist festzustellen, dass sich die bekannten Entschäumer, die in bauchemischen Anwendungen, wie bei der Herstellung von Trockenmörteln und Betonen eingesetzt werden, entweder aus einkomponentigen Wirksubstanzen (hauptsächlich aus den Substanzklassen Silikone, Mineralöle, Kohlenwasserstoffe, Polyglycole, Fettsäurederivate oder Trialkylphosphate) oder aus Kombinationen von Mineralöl mit den genannten Wirksubstanzen in Form einer Flüssigkeit als Betonzusatzmittel und adsorbiert auf inerten anorganischen Trägermaterialien als pulverförmiger Entschäumer für Trockenmörtel, zusammensetzen.

Für die vorliegende Erfindung hat sich deshalb die Aufgabe gestellt, eine pulverförmige Zusammensetzung bereitzustellen, die auch als Entschäumer für Trockenmörtelanwendung geeignet ist und die auf Verbindungen zurückgeht, die unter wirtschaftlichen Gesichtspunkten leicht zugänglich sind und die im konkreten Anwendungsfall die Verarbeitbarkeit und die Qualität des Endproduktes nicht negativ beeinflussen.

Gelöst wurde diese Aufgabe mit einer pulverförmigen Zusammensetzung, die frei ist von Kohlenwasserstoffen, enthaltend als Hauptbestandteile
a) 5 bis 40 Gew.-% mindestens eines von den Kohlenwasserstoffen verschiedenen Fettsäure- und/oder Fettalkohol-Derivats,
b) 0,5 bis 10 Gew.-% mindestens eines Silikonöls, und
c) 20 bis 85 Gew.-% mindestens eines Trägermaterials, wobei die Komponenten a) und b) auf das Trägermaterial c) aufgebracht wurden.

Überraschend hat sich dabei herausgestellt, dass mit der erfindungsgemäßen Zusammensetzung nicht nur die Aufgabenstellung voll erfüllt werden konnte, sondern dass der pulverförmige Entschäumer auch über einen großen Temperaturbereich und selbst bei niedrigen Temperaturen <10 °C, insbesondere 3 bis 6 °C, sehr gute Wirkung zeigt und zudem sehr schnell wirksam, d.h. auch für maschinenapplizierte Systeme geeignet ist. Das Pulver zeigt als Zusatzeffekt eine nur sehr wenig ausgeprägte Verklumpungsneigung, weshalb bei seiner Herstellung auf teure Nachbehandlungsschritte verzichtet werden kann. Außerdem wird mit der beanspruchten Zusammensetzung bei nur geringer Dosierung eine ausgezeichnete Entschäumerwirkung erzielt.

Unter "frei von Kohlenwasserstoffen" wird im vorliegenden Zusammenhang insbesondere verstanden, dass die erfindungsgemäße Zusammensetzung - mit Ausnahme der als Komponente a) bezeichneten Fettsäure- und Fettalkoholderivate - keine Mineralöle oder andere Kohlenwasserstoffe mit Tensid- und Entschäumerwirkung enthält. Die als Komponente a) erfindungsgemäß vorgesehenen Fettsäure- und Fettalkoholderivate fallen entsprechend der vorliegenden Erfindung somit nicht unter die Definition von "Kohlenwasserstoffe".

Es hat sich als vorteilhaft herausgestellt, wenn die erfindungsgemäße Zusammensetzung die Komponente a) in Anteilen von 20 bis 35 Gew.-% und vorzugsweise von 25 bis 30 Gew.-%, enthält. Die Komponente b) soll insbesondere in Anteilen von 1 bis 5 Gew.-% und vorzugsweise von 2 bis 4 Gew.-% enthalten sein. Schließlich sollen sich die Anteile der Komponente c) im Bereich von 40 bis 75 Gew.-% und vorzugsweise von 50 bis 70 Gew.-% bewegen.

Von der vorliegenden Erfindung ist auch vorgesehen, dass sie die Komponenten a) und b) im Gewichtsverhältnis a) : b) 80 bis 90 : 20 bis 10, vorzugsweise 85 : 15 und besonders bevorzugt 90 : 10 enthält.

Bei der Komponente a), also dem Fettsäure- oder Fettalkoholderivat, handelt es sich vorzugsweise um mindestens einen Vertreter, der ausgewählt wurde aus der Gruppe der Fettalkoholalkoxylate und veresterten Fettalkohole. Vorzugsweise handelt es sich bei der Komponente a) um mindestens einen C₁₆₋₁₈-Fettalkohol und vorzugsweise um eine Variante mit Ethylenoxid (EO) und Propylenoxid (PO)-Einheiten. Die Komponente a) weist insbesondere einen nicht-ionischen Tensidcharakter auf, was für so genannte Endgruppen-verschlossene Fettalkoholalkoxylate mit einer R- und für unverschlossene Fettalkoholalkoxylate mit einer H-Terminierung zutrifft, wobei die H-Terminierung bevorzugt ist. Als Grundlage ist erfindungsgemäß die Addition von Alkylenoxiden an primäre bzw. sekundäre Alkohole anzusehen.

Enthält die pulverförmige Zusammensetzung der vorliegenden Erfindung als Komponente a) ein Fettalkoholderivat, so sollte dieses pro Mol 2 bis 6 EO-Einheiten und 10 bis 15 PO-Einheiten und vorzugsweise 4 EO- und 13 PO-Einheiten aufweisen. Dabei kann das Fettalkoholderivat die EO- und PO-Einheiten randomisiert, oder aber auch als Block enthalten, wobei die Blockanordnung als besonders bevorzugt anzusehen ist. Die Komponente a) stellt deshalb ein typisches PO/EO-Blockpolymerisat oder aber auch ein EO/PO-Blockpolymerisat dar. Bevorzugt ist die Reihenfolge Alkohol-EO-PO.

Endgruppen-verschlossene Fettalkoholalkoxylate bleiben auch unter extrem alkalischen Bedingungen, wie sie insbesondere in stark beschleunigten zementären Systemen wie z.B. bei Spritzbetonanwendungen vorliegen, stabil und ihre entschäumenden Eigenschaften bleiben erhalten. Als "Endgruppen-verschlossen" werden im Rahmen der vorliegenden Erfindung solche Alkoxylate verstanden, deren freie OH-Gruppen chemisch z. B. mit Alkylgruppen und insbesondere C₁-C₆-Alkylgruppen verschlossen sind. Neben der besseren alkalischen Stabilität wird dadurch eine herabgesetzte Viskosität erreicht, wodurch die Dosierung positiv beeinflusst werden kann. Von der vorliegenden Erfindung werden als Komponente a) insbesondere Vertreter bevorzugt, bei denen es sich um C₁₆-C₁₈-Alkohole mit 4 EO- und 13 PO-Einheiten handelt. Diese können bspw. mit folgender Formel dargestellt werden:

H₃C-(CH₂)₁₅₋₁₇-O-(CH₂-CH₂O)₄-(CH(CH₃)-CH₂-O)₁₃-H

Ein typisches Beispiel ist durch die CAS-Nr. 68002-96-0 repräsentiert.

Bezüglich der Komponente b) sieht die vorliegende Erfindung vor, dass diese ausgewählt wird, aus der Gruppe der Silikonöle und vorzugsweise der Dialkylpolysiloxane, wobei Dimethylpolysiloxane, die meist mit Fällungskieselsäuren verunreinigt sind, besonders bevorzugt sind.

Selbstverständlich können sämtliche Vertreter bzgl. der Komponenten a) und b) untereinander in beliebigen Kombinationen in der beanspruchten pulverförmigen Zusammensetzung in geträgerter Form vorhanden sein.

Beispiele für geeignete Silikonöle sind Korasilon-Vertreter der Firma Obermeier GmbH & Co. KG (Bad Berleburg).

Grundsätzlich ist anzumerken, dass insbesondere die für die Komponenten a) und b) gewählten Vertreter physiologisch unbedenklich sein sollten.

Vertreter der Komponente b), wie das Polydimethylsiloxan (PDMS; CAS-Nr.: 63148-62-9), werden üblicherweise aus den zugrundeliegenden Dialkylchlorosilanen und Wasser hergestellt. Als Formel für derartige Vertreter kann angegeben werden: (R)₃SiO[Si(R)₂O]ₙSi(R)₃, mit R= CH₃, wobei durch Auswahl von n die Viskosität, hier vorzugsweise 1000-10000 mPas, besonders bevorzugt 2000-5000 mPas, eingestellt werden kann.

Bei der Komponente c) handelt es sich im Rahmen der vorliegenden Erfindung um ein typisches mineralisches Trägermaterial, welches vorzugsweise ausgewählt ist aus der Gruppe Kreide, Dolomit, Muschelkalk, Kieselsäure und insbesondere Kalkmehl und pyrogene Kieselsäure. Selbstverständlich können auch sämtliche beliebige Mischungen daraus dazu verwendet werden, um die jeweiligen Vertreter der Komponente a) und b) aufzunehmen. Es ist als vorteilhaft anzusehen, wenn das Trägermaterial c) eine durchschnittliche Partikelgröße von 2 bis 300 µm, vorzugsweise von 2 bis 120 µm und ganz besonders bevorzugt von 20 bis 50 µm aufweist. Besonders bevorzugt ist eine bimodale Korngrößenverteilung. Dies drückt sich insbesondere in einer Variante der vorliegenden Erfindung aus, bei der die pulverförmige Zusammensetzung eine durchschnittliche Partikelgröße von 5 bis 300 µm und vorzugsweise eine bimodale Partikelgrößenverteilung aufweist, bei der 60 bis 80% der Teilchen eine durchschnittliche Partikelgröße von 10 bis 20 µm und 20 bis 40% der Teilchen eine durchschnittliche Partikelgröße von 100 bis 120 µm aufweisen. Besonders bevorzugt ist ein D₅₀-Wert von 50 µm.

Insgesamt stellt die vorliegende Zusammensetzung ein binäres System dar, bei dem zwei unterschiedliche Verbindungsklassen mit jeweils entschäumender Wirkung auf ein mineralisches Trägermaterial aufgebracht sind. Neben diesen erfindungswesentlichen Hauptkomponenten kann die vorliegende Zusammensetzung als weitere Komponenten noch Cellulosefasern, Sprengmittel oder Netzmittel in beliebiger Mischung mit- und untereinander enthalten. Die Cellulosefasern sollten in feinverteilter Form vorliegen und die Sprengmittel in feinvermahlener Form. Sämtliche Vertreter der weiteren Komponenten sind nicht auf der Komponente c) geträgert.

Neben der Zusammensetzung selbst ist von der vorliegenden Erfindung auch ein Verfahren zur Herstellung solcher Zusammensetzungen umfasst. Dabei wird in einem ersten Verfahrensschritt a) eine Vormischung der jeweils flüssigen Komponente a) und b) durch Vereinigung und Rühren hergestellt. Parallel dazu, oder auch nachfolgend, werden im Verfahrensschritt b) die Trockenkomponenten des Trägermaterials c) homogenisiert. Abschließend wird im Verfahrensschritt c) die aus dem Verfahrensschritt a) erhaltene flüssige Vormischung auf das Trägermaterial c) aufgesprüht, wodurch die erfindungsgemäße Zusammensetzung als Pulver anfällt. Vorzugsweise sollte dieses Pulver einen Feuchtigkeitsgehalt von maximal 1 Gew.-% aufweisen.

Wie bereits eingangs erwähnt, werden die beanspruchten Zusammensetzungen, die wie eben beschrieben hergestellt werden können, vorzugsweise als Entschäumer für Trockenmörtelanwendungen eingesetzt.

Zum genannten Zweck sollten die Trockenmörtelmischungen die pulverförmige Zusammensetzung in einer Dosierung von 0,01 bis 1,0 Gew.-%, vorzugsweise von 0,03 bis 0,8 Gew.-% und besonders bevorzugt von 0,05 bis 0,1 Gew.-%, jeweils bezogen auf die Gesamtzusammensetzung der Trockenmörtelmischung, dieser zugesetzt werden.

Aufgrund ihrer hervorragenden Eigenschaften eignen sich die erfindungsgemäßen Zusammensetzungen insbesondere in den Anwendungsgebieten selbstverlaufende Spachtelmassen, Vergussmörtel, Anhydrit-Fließestrich, zementäre Estriche, Fliesenkleber, Fugenmörtel, Putze, Wärmedämmverbundsysteme, Mauermörtel und Feinbetone sowie in dem breiten Anwendungsgebiet des sogenannten "Ölfeldbereichs", nämlich der Exploration, Ausbeutung und/oder Komplettierung von unterirdischen Erdöl- und Erdgaslagerstätten und hier insbesondere der Zementierung.

Im Gegensatz zu den bekannten pulverförmigen und mehrkomponentigen Entschäumern für die Trockenmörtelindustrie mit Wirksubstanzen aus verschiedenen chemischen Substanzklassen, bei denen es sich hauptsächlich um Kohlenwasserstoffe (Mineralöl) enthaltende Mischungen in Kombination mit anderen entschäumend wirkenden Substanzen handelt, zeichnet sich die insbesondere mineralölfreie Zusammensetzung der vorliegenden Erfindung insbesondere durch die Kombination der beiden Wirksubstanzen spezielles Fettalkohol-/Fettsäure-Derivat und Silikonöl in geträgerter Form aus. Die Schaumbildung, wie sie insbesondere beim Einarbeiten von Dispergiermitteln in noch nicht ausgehärtete frische bauchemische Massen auftritt, wird mit den beanspruchten Zusammensetzungen selbst in Abmischungen mit hoher Rohdichte fast vollständig unterdrückt, wobei es insbesondere nicht zu Schaumkronen und den sonst auf den ausgehärteten Oberflächen auftretenden Kraterbildungen/Löchern kommt, die durch geplatzte Schaumbläschen verursacht werden. Sollten dennoch Schaumbläschen entstehen, so sind diese aufgrund der raschen Entlüftung und Entschäumung schnell eliminiert, weshalb es zu einem einheitlichen Erscheinungsbild der ausgehärteten Oberflächen und somit zu einer zusätzlich verbesserten optischen Produktqualität kommt.

Weiterhin zeichnet sich die Zusammensetzung durch eine hohe Lagerstabilität aus. Selbst bei längerer Lagerung unter harten Bedingungen (60°C, 10 Wochen) verliert das Produkt seine entschäumende Wirksamkeit nicht.

Die nachfolgenden Beispiele verdeutlichen die Vorteile der vorliegenden Erfindung.

### Beispiele

1. Der erfindungsgemäße Entschäumer wurde bei Dosierungen von 0 Gew.-%, 0,05 Gew.-% und 0,10 Gew.-%, jeweils bezogen auf die Gesamtmasse der Trockenmörtelmischung, gemäß folgender Methode getestet:

**Rezeptur der Trockenmörtelmischung**

| | Gew.-% |
|---|---|
| Portlandzement (Milke CEM I 42,5 R) | 18,500 |
| Tonerdezement (Ciment Fondu, Kerneos) | 11,500 |
| CaSO₄ (CAB 30; Calciumsulfatbinder Lanxess) | 6,500 |
| Quarzsand H33 (Quarzwerke) | 40,740 |
| Kalksteinmehl (Omyacarb 20BG, Omya) | 19,400 |
| Redispersionspulver (Vinnapas 5023 L, Wacker) | 2,000 |
| Lithiumcarbonat | 0,100 |
| Entschäumer (gemäß Erfindung) | var |
| Weinsäure | 0,030 |
| Zitronensäure | 0,180 |
| Schwindreduzierer (Metolat P860, Münzing Chemie) | 0,650 |
| Melflux 2651F (Fließmittel, BASF) | 0,200 |
| Starvis 3003F (Stabilisierer, BASF) | 0,150 |
| Summe | 100,000 |
| Wasser | 20,000 |

Direkt nach Mischende (gem. EN1937) sowie 10 Minuten nach Mischende wurde je eine Musterfläche (25 cm² mit einer Schichtdicke zwischen 0,5 und 1,0 cm) ausgegossen. Nach Erhärten der Musterfläche werden Krater und Dellen, die auf nicht aufgeplatzte Luftbläschen zurückzuführen sind, bezogen auf eine Fläche von 1cm² ausgezählt, die Frischmörtelrohdichte und der Luftgehalt des Frischmörtels bestimmt.
2. Der erfindungsgemäße Entschäumer wurde bei einer Dosierung von 0,05 Gew.-%, bezogen auf die Gesamtmasse der gipsbasierten Trockenmörtelmischung, gemäß folgender Methode getestet:

**Rezeptur der hoch fließfähigen, gipsbasierten Trockenmörtelmischung ("Self Levelling Underlayment"; SLU)**

| | Rezeptur 1 ohne Entschäumer | Rezeptur 2 Entschäumer gem. Erfindung |
|---|---|---|
| | Gew.-% | Gew.-% |
| alpha-Halbhydrat (Knauf, Kohlekraftwerk Niederaußem) | 40,00 | 40,00 |
| Quarzsand H33 (Quarzwerke) | 40,00 | 40,00 |
| Kalksteinmehl (Omyacarb 20BG, Omya) | 17,33 | 17,28 |
| Redispersionspulver (Vinnapas 5011 L, Wacker) | 2,50 | 2,50 |
| Entschäumer (gemäß Erfindung) | - | 0,05 |
| Zitronensäure | 0,02 | 0,02 |
| Melflux 5581F (Fließmittel, BASF) | 0,07 | 0,07 |
| Starvis 3003F (Stabilisierer, BASF) | 0,08 | 0,08 |
| Summe | 100,00 | 100,00 |
| Wasser | 20,00 | 20,00 |

### Ergebnis:

Während die Oberfläche der abgebundenen Masse ohne Entschäumer zahlreiche Krater aufwies, war die Oberfläche der Masse mit dem Entschäumer gemäß Erfindung optisch durchgehend glatt ohne Kraterbildung aufgrund von Lufteinschlüssen.

### Anwendungsbeispiele:

### 1. Produktdaten:

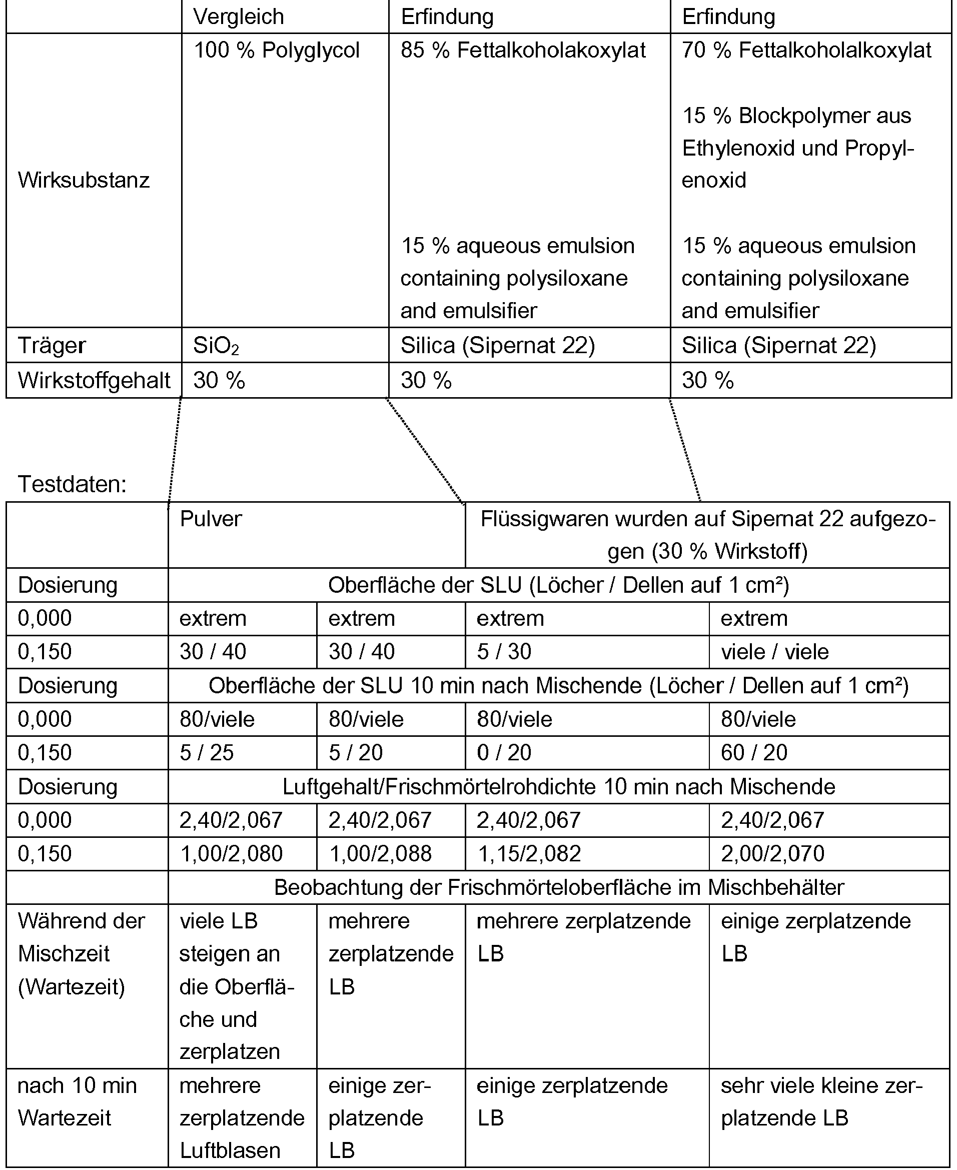

### 2. Weitere Erfindunsbeisiele:

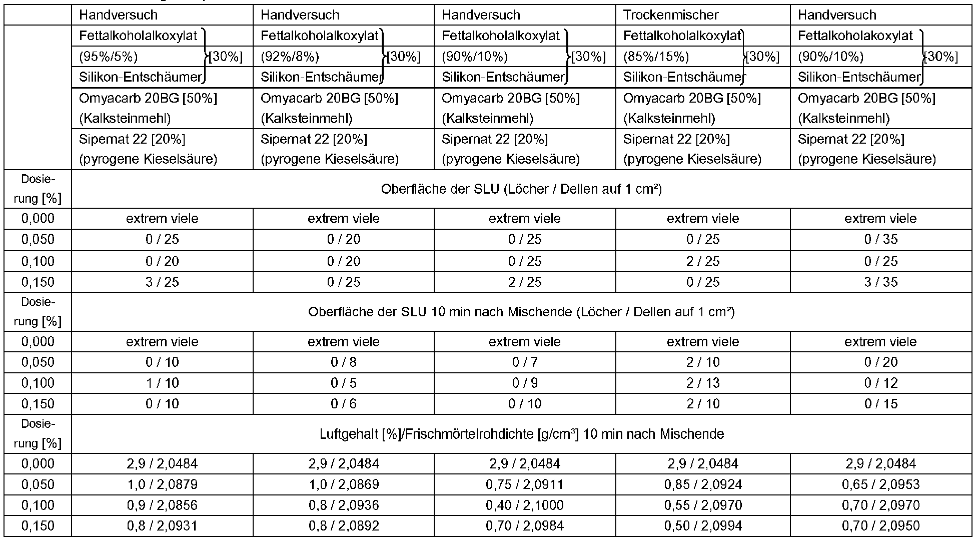

### 3. Lagerungstests

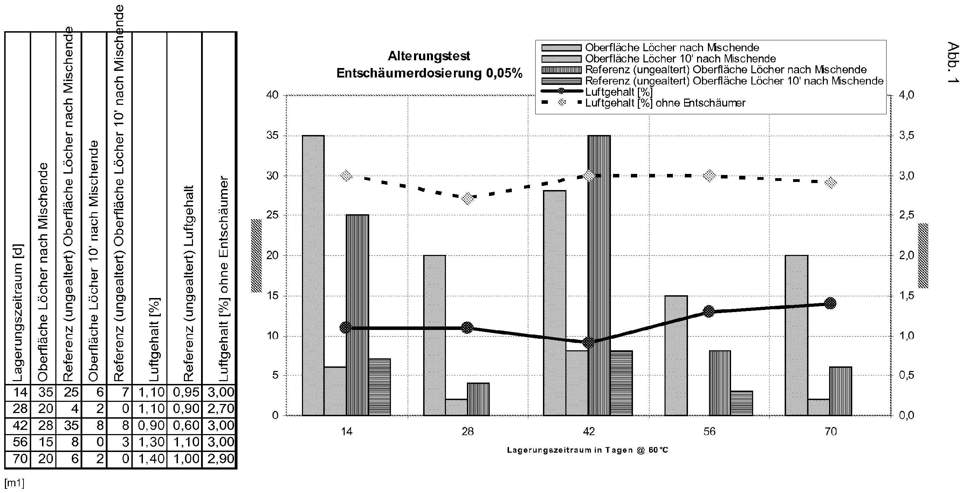

Nach verschiedenen Lagerungszeiträumen (Abstände 14 Tage) wurde die entschäumende Wirkung der erfindungsgemäßen Mischungszusammensetzung im o.g. Testsystem bei einer Dosierung von 0,05 M.% bez. a. Tr. M. überprüft. Direkt nach Mischende (gem. EN1937) sowie 10 Minuten nach Mischende wurde je eine Musterfläche (25 cm² mit einer Schichtdicke zwischen 0,5 und 1,0 cm) ausgegossen. Nach Erhärten der Musterfläche werden Krater, die auf nicht aufgeplatzte Luftbläschen zurückzuführen sind, bezogen auf eine Fläche von 1cm² ausgezählt, die Frischmörtelrohdichte und der Luftgehalt des Frischmörtels bestimmt (Abb. 1)

## Patentansprüche

1. Pulverförmige Zusammensetzung, die frei ist von Kohlenwasserstoffen, enthaltend als Hauptbestandteile
a) 5 bis 40 Gew.-% mindestens eines von den Kohlenwasserstoffen unterschiedlichen Fettsäure- und/oder Fettalkohol-Derivats,
b) 0,5 bis 10 Gew.-% mindestens eines Silikonöls,
und
c) 20 bis 85 Gew.-% mindestens eines Trägermaterials,
wobei die Komponenten a) und b) auf das Trägermaterial c) aufgebracht wurden.

2. Zusammensetzung nach Anspruch 1, **dadurch gekennzeichnet, dass** sie die Komponente a) in Anteilen von 20 bis 35 Gew.-%, vorzugsweise von 25 bis 30 Gew.-%, die Komponente b) in Anteilen von 1 bis 5 Gew.-%, vorzugsweise von 2 bis 4 Gew.-%, und/oder die Komponente c) in Anteilen von 40 bis 75 Gew.-%, vorzugsweise von 50 bis 70 Gew.-% enthält.

3. Zusammensetzung nach einem der Ansprüche 1 oder 2, **dadurch gekennzeichnet, dass** die Komponenten a) und b) im Gewichtsverhältnis a) : b) 80 bis 90 : 20 bis 10, vorzugsweise 85 : 15 und besonders bevorzugt 90 : 10 vorliegen.

4. Zusammensetzung nach einem der Ansprüche 1 bis 3, **dadurch gekennzeichnet, dass** es sich bei der Komponente a) um mindestens einen Vertreter ausgewählt aus der Gruppe der Fettalkoholalkoxylate und veresterte Fettalkohole handelt.

5. Zusammensetzung nach einem der Ansprüche 1 bis 4, **dadurch gekennzeichnet, dass** es sich bei der Komponente a) um mindestens einen C₁₆₋₁₈-Fettalkohol handelt und vorzugsweise um eine Variante mit Ethylenoxid (EO)- und Propylenoxid (PO)-Einheiten.

6. Zusammensetzung nach Anspruch 5, **dadurch gekennzeichnet, dass** das Fettalkohol-Derivat pro Mol 2 bis 6 EO-Einheiten und 10 bis 15 PO-Einheiten und vorzugsweise 4 EO- und 13 PO-Einheiten aufweist.

7. Zusammensetzung nach einem der Ansprüche 5 oder 6, **dadurch gekennzeichnet, dass** das Fettalkohol-Derivat die EO- und PO-Einheiten randomisiert oder als Block und vorzugsweise in Blockanordnung enthält, insbesondere in der Reihenfolge Alkohol-EO-PO.

8. Zusammensetzung nach einem der Ansprüche 1 bis 7, **dadurch gekennzeichnet, dass** das Fettalkohol-alkoxylat R-terminiert, vorzugsweise mit R =C₁₋₆-Alkyl, und/oder H-terminiert und unverschlossen sein kann, und insbesondere H-terminiert vorliegt.

9. Zusammensetzung nach einem der Ansprüche 1 bis 8, **dadurch gekennzeichnet, dass** es sich bei der Komponente b) um mindestens einen Vertreter ausgewählt aus der Gruppe der Silikonöle, vorzugsweise Dialkylpolysiloxane und insbesondere Dimethylpolysiloxane, handelt.

10. Zusammensetzung nach einem der Ansprüche 1 bis 9, **dadurch gekennzeichnet, dass** es sich bei der Komponente c) um ein mineralisches Trägermaterial handelt, vorzugsweise ausgewählt aus der Gruppe Kreide, Dolomit, Muschelkalk, Kieselsäure und insbesondere Kalkmehl und pyrogene Kieselsäure sowie beliebige Mischungen daraus.

11. Zusammensetzung nach einem der Ansprüche 1 bis 10, **dadurch gekennzeichnet, dass** das Trägermaterial c) eine durchschnittliche Partikelgröße von 2 bis 300 µm, vorzugsweise von 2 bis 120 µm und ganz besonders bevorzugt von 20 bis 50 µm aufweist, bevorzugt in bimodaler Korngrößenverteilung.

12. Zusammensetzung nach einem der Ansprüche 1 bis 11, **dadurch gekennzeichnet, dass** sie eine durchschnittliche Partikelgröße von 5 bis 300 µm und vorzugsweise eine bimodale Partikelgrößenverteilung von 60 bis 80 % zwischen 10 und 20 µm sowie 20 bis 40 % zwischen 100 und 120 µm aufweist, mit D₅₀=50µm.

13. Zusammensetzung nach einem der Ansprüche 1 bis 12, **dadurch gekennzeichnet, dass** sie als weitere Komponente mindestens einen Vertreter ausgewählt aus der Gruppe Cellulosefasern, Sprengmittel oder Netzmittel enthält.

14. Verfahren zur Herstellung der Zusammensetzung nach einem der Ansprüche 1 bis 13, indem a) eine Vormischung der jeweils flüssigen Komponenten a) und b) durch Vereinigung und Rühren hergestellt wird, b) die Trockenkomponenten des Trägermaterials c) homogenisiert werden und abschließend die flüssige Vormischung auf das Trägermaterial c) (Trockenkomponente) aufgesprüht wird wodurch das Produkt als Pulver anfällt, vorzugsweise mit einem Feuchtigkeitsgehalt von max. 1 Gew.-%.

15. Verwendung der Zusammensetzung nach einem der Ansprüche 1 bis 13 als Entschäumer für Trockenmörtelanwendungen.

16. Verwendung nach Anspruch 15, **dadurch gekennzeichnet, dass** die Zusammensetzung der Trockenmörtelmischung in einer Dosierung von 0,01 bis 1,0 Gew.-%, vorzugsweise von 0,03 bis 0,8 Gew.-% und besonders bevorzugt von 0,05 bis 0,15 Gew.-%, jeweils bezogen auf die Gesamtzusammensetzung der Trockenmörtelmischung, zugesetzt wird.

17. Verwendung nach einem der Ansprüche 15 oder 16 in den Anwendungsgebieten selbstverlaufende Spachtelmassen, Vergussmörtel, Anhydrit-Fließestrich, zementäre Estriche, Fliesenkleber, Fugenmörtel, Putze, Wärmedämmverbundsysteme, Mauermörtel und Feinbetone sowie Exploration, Ausbeutung und Komplettierung von unterirdischen Erdöl- und Erdgaslagerstätten, insbesondere der Zementierung.

## Claims

1. A pulverulent composition which is free of hydrocarbons and comprises as main constituents
a) from 5 to 40% by weight of at least one fatty acid derivative and/or fatty alcohol derivative which is not a hydrocarbon,
b) from 0.5 to 10% by weight of at least one silicone oil,
and
c) from 20 to 85% by weight of at least one support material,
where the components a) and b) have been applied to the support material c).

2. The composition according to claim 1, **characterized in that** it contains the component a) in proportions of from 20 to 35% by weight, preferably from 25 to 30% by weight, the component b) in proportions of from 1 to 5% by weight, preferably from 2 to 4% by weight, and/or the component c) in proportions of from 40 to 75% by weight, preferably from 50 to 70% by weight.

3. The composition according to either of claims 1 and 2, **characterized in that** the components a) and b) are present in a weight ratio of a) :b) of 80-90:20-10, preferably 85:15 and particularly preferably 90:10.

4. The composition according to any of claims 1 to 3, **characterized in that** the component a) is at least one representative selected from the group consisting of fatty alcohol alkoxylates and esterified fatty alcohols.

5. The composition according to any of claims 1 to 4, **characterized in that** the component a) is at least one C₁₆₋₁₈-fatty alcohol and preferably a variant comprising ethylene oxide (EO) units and propylene oxide (PO) units.

6. The composition according to claim 5, **characterized in that** the fatty alcohol derivative has from 2 to 6 EO units and from 10 to 15 PO units and preferably 4 EO units and 13 PO units per mole.

7. The composition according to either of claims 5 and 6, **characterized in that** the fatty alcohol derivative contains the EO and PO units randomly distributed or in blocks and preferably in a block arrangement, in particular in the sequence alcohol-EO-PO.

8. The composition according to any of claims 1 to 7, **characterized in that** the fatty alcohol alkoxylate can be R-terminated, preferably with R =C₁₋₆-alkyl, and/or H-terminated and uncapped and in particular is present in H-terminated form.

9. The composition according to any of claims 1 to 8, **characterized in that** the component b) is at least one representative selected from the group consisting of silicone oils, preferably polydialkylsiloxanes and in particular polydimethylsiloxanes.

10. The composition according to any of claims 1 to 9, **characterized in that** the component c) is a mineral support material which is preferably selected from the group consisting of chalk, dolomite, shell limestone, silica and in particular ground limestone and pyrogenic silica and also any mixtures thereof.

11. The composition according to any of claims 1 to 10, **characterized in that** the support material c) has an average particle size of from 2 to 300 µm, preferably from 2 to 120 µm and very particularly preferably from 20 to 50 µm, preferably in a bimodal particle size distribution.

12. The composition according to any of claims 1 to 11, **characterized in that** it has an average particle size of from 5 to 300 µm and preferably a bimodal particle size distribution of from 60 to 80% in the range from 10 to 20 µm and from 20 to 40% in the range from 100 to 120 µm, with D₅₀ = 50 µm.

13. The composition according to any of claims 1 to 12, **characterized in that** it contains at least one representative selected from the group consisting of cellulose fibers, disintegrants and wetting agents as further component.

14. A process for producing the composition according to any of claims 1 to 13, wherein a) a premix of the in each case liquid components a) and b) is produced by combining the components and stirring, b) the dry components of the support material c) are homogenized and the liquid premix is finally sprayed onto the support material c) (dry component), giving the product as powder, preferably with a moisture content of not more than 1% by weight.

15. The use of the composition according to any of claims 1 to 13 as antifoam for dry mortar applications.

16. The use according to claim 15, **characterized in that** the composition is added to the dry mortar mixture in an added amount of from 0.01 to 1.0% by weight, preferably from 0.03 to 0.8% by weight and particularly preferably from 0.05 to 0.15% by weight, in each case based on the total composition of the dry mortar mixture.

17. The use according to either of claims 15 and 16 in the fields of self-leveling knifing fillers, embedding mortars, anhydrite flow screed, cement-based screeds, tile adhesives, joint grouts, renders, composite thermal insulation systems, masonry mortars and fine-grained concretes and also exploration, exploitation and completion of underground oil and natural gas reservoirs, in particular cementing.

## Revendications

1. Composition sous forme de poudre, qui est exempte d'hydrocarbures, contenant comme constituants principaux
a) 5 à 40% en poids d'au moins un dérivé d'acide gras et/ou d'alcool gras différent des hydrocarbures,
b) 0,5 à 10% en poids d'au moins une huile de silicone et
c) 20 à 85% en poids d'au moins un matériau support,
les composants a) et b) ayant été appliqués sur le matériau support c).

2. Composition selon la revendication 1, **caractérisée en ce qu'**elle contient le composant a) en des proportions de 20 à 35% en poids, de préférence de 25 à 30% en poids, le composant b) en des proportions de 1 à 5% en poids, de préférence de 2 à 4% poids et/ou le composant c) en des proportions de 40 à 75% en poids, de préférence de 50 à 70% en poids.

3. Composition selon l'une quelconque des revendications 1 ou 2, **caractérisée en ce que** les composants a) et b) se trouvent dans un rapport pondéral a) :b) de 80 à 90:20 à 10, de préférence de 85:15 et de manière particulièrement préférée de 90:10.

4. Composition selon l'une quelconque des revendications 1 à 3, **caractérisée en ce qu'**il s'agit, pour le composant a), d'au moins un représentant choisi dans le groupe des alcoxylates d'alcools gras et des alcools gras estérifiés.

5. Composition selon l'une quelconque des revendications 1 à 4, **caractérisée en ce qu'**il s'agit, pour le composant a), d'au moins un alcool gras en C₁₆₋₁₈ et de préférence d'une variante avec des motifs d'oxyde d'éthylène (OE) et d'oxyde de propylène (OP).

6. Composition selon la revendication 5, **caractérisée en ce que** le dérivé d'alcool gras présente, par mole, 2 à 6 motifs d'OE et 10 à 15 motifs d'OP et de préférence 4 motifs d'OE et 13 motifs d'OP.

7. Composition selon l'une quelconque des revendications 5 ou 6, **caractérisée en ce que** le dérivé d'alcool gras contient les motifs d'OE et d'OP sous forme randomisée ou sous forme de bloc et de préférence dans un agencement séquencé, en particulier dans l'ordre alcool-OE-OP.

8. Composition selon l'une quelconque des revendications 1 à 7, **caractérisée en ce que** l'alcoxylate d'alcool gras est terminé en R, de préférence avec R = C₁₋₆-alkyle, et/ou terminé en H et peut être ouvert et est en particulier terminé par H.

9. Composition selon l'une quelconque des revendications 1 à 8, **caractérisée en ce qu'**il s'agit, pour le composant b), d'au moins un représentant choisi dans le groupe des huiles de silicone, de préférence des dialkylpolysiloxanes et en particulier des diméthylpolysiloxanes.

10. Composition selon l'une quelconque des revendications 1 à 9, **caractérisée** en ce qui s'agit, pour le composant c), d'un matériau support minéral, de préférence choisi dans le groupe formé par la craie, la dolomite, le calcaire coquillier, la silice et en particulier la chaux et la silice pyrogène ainsi que les mélanges quelconques de ceux-ci.

11. Composition selon l'une quelconque des revendications 1 à 10, **caractérisée en ce que** le matériau support c) présente une grosseur moyenne de particule de 2 à 300 µm, de préférence de 2 à 120 µm et de manière tout particulièrement préférée de 20 à 50 µm, de préférence dans une répartition granulométrique bimodale.

12. Composition selon l'une quelconque des revendications 1 à 11, **caractérisée en ce qu'**elle présente une grosseur moyenne de particule de 5 à 300 µm et de préférence une répartition granulométrique bimodale de 60 à 80% entre 10 et 20 µm ainsi que de 20 à 40% entre 100 et 120 µm, avec D₅₀ = 50 µm.

13. Composition selon l'une quelconque des revendications 1 à 12, **caractérisée en ce qu'**elle contient, comme autre composant, au moins un représentant choisi dans le groupe des fibres de cellulose, des agents de désintégration ou des agents mouillants.

14. Procédé pour la préparation de la composition selon l'une quelconque des revendications 1 à 13, en ce que a) on prépare un prémélange des composants liquides respectifs a) et b) par réunion et agitation, b) on homogénéise les composants secs du matériau support c) et on pulvérise enfin le prémélange liquide sur le matériau support c) (composant sec), suite à quoi le produit est obtenu sous forme de poudre, présentant de préférence une teneur en humidité au maximum 1% en poids.

15. Utilisation de la composition selon l'une quelconque des revendications 1 à 13 comme antimousse pour des applications de mortier sec.

16. Utilisation selon la revendication 15, **caractérisée en ce que** la composition du mélange de mortier sec est ajoutée en un dosage de 0,01 à 1,0% en poids, de préférence de 0,03 à 0,8% en poids et de manière particulièrement préférée de 0,05 à 0,15% en poids, à chaque fois par rapport à la composition totale du mélange de mortier sec.

17. Utilisation selon l'une quelconque des revendications 15 ou 16 dans les domaines d'utilisation des masses de bouchage autonivelantes, des chapes liquides à l'anhydrite, des chapes cimentaires, des colles à carreaux, des mortiers de jointoiement, des enduits, des systèmes composites d'isolation thermique, des mortiers pour les murs et des bétons fins ainsi que les domaines de l'exploration, de l'exploitation et de la complétion des gisements souterrains de pétrole et de gaz naturel, en particulier de la cimentation.
